# EUROPEAN PATENT APPLICATION

(11) **EP 4 715 244 A1**
(43) Date of publication of application: **25.03.2026**
(21) Application number: 25198251.8
(22) Date of filing: 26.08.2025
(51) Int. Cl.: F16K 5/06, F16K 27/06

(54) **BALL VALVE, PARTICULARLY FOR AIR CONDITIONING AND/OR REFRIGERATION SYSTEMS**

(30) Priority: 19.09.2024 IT 202400020887
(71) Applicant: Olab S.r.l., 25030 Torbole Casaglia (Brescia) (IT)
(72) Inventor: BOTTURA, Cesare, 25121 BRESCIA (IT)
(74) Representative: Modiano, Micaela Nadia

(57) **Abstract**

A ball valve (1), particularly for air conditioning and/or refrigeration systems, which comprises:
- a valve body (2) which has a substantially axially symmetrical geometry with a circular base with respect to a longitudinal axis (3) and defines inside it a first chamber (4) and a second chamber (5) which communicate with each other through a central hole (6);
- a valve assembly (8) accommodated in the first chamber (4) and with an actuation axis (11) substantially perpendicular to the longitudinal axis (3);
- an actuation assembly (9) accommodated in the second chamber (5) along the actuation axis (11);
- a sleeve (19) removably associated with the valve body (2) by virtue of screw means (29) so as to close the first chamber (4);
both the valve body (2) and the sleeve (19) are configured so that they can be connected, respectively, to a first and to a second connecting pipe of a refrigeration system or the like.

## Description

The present invention relates to a ball valve, particularly for air conditioning and/or refrigeration systems.

Ball valves are devices used for shutting off branches or parts of a circuit.

Their function is in fact to block or allow the flow of fluid in the pipes connected to them.

There are many different types of ball valves and their use is very widespread in many and varied sectors.

According to the sectors of use, the entry/exit connections and the type of materials used may vary.

In the sectors of air-conditioning and refrigeration, the valves used can be divided mainly into two types.

The first type is a ball valve with welded connections, for example of ODS type.

This device is composed of a valve body into which the following are inserted in succession: a sealing berth, usually made of PTFE (an acronym for PolyTetraFluoroEthylene), an actuation stem provided with sealing gaskets, a perforated ball, and an additional sealing berth.

The components are then sealed inside the valve by screwing a sleeve that, once in abutment on the end of the valve body, presses the ball onto the berths, in so doing generating the ball seal.

By rotating the actuation stem by 90°, the valve can be moved from a closed position to an open condition, i.e. to allow flow, and vice versa.

In this type of valve, usually the valve body and the sleeve are made of brass and are coupled to pipes made of copper.

At the ends of the pipes there is in fact a flaring which allows the installation technician to insert the copper pipe to be connected to the valve and braze weld it with weld filler material.

The seal between the valve body and the sleeve is usually provided, after screwing to abutment, by means of TIG (Tungsten Inert Gas) welding, whereas the seal of the actuation stem is provided by a pair of annular gaskets made of elastomeric material.

This first type of conventional valve is not devoid of drawbacks, among which is the fact that, at the assembly stage at the factory, there can be a great deal of discarded material if the TIG welding process is not kept under control.

In fact, during the sealing between the valve body and the sleeve, if the welding parameters are not precise and/or the valve is not correctly cooled by flushing the inside with cold gas, the high temperatures can damage (melt or deform) the sealing berths of the ball and the annular sealing gaskets of the actuation stem.

If these sealing elements are damaged, the seal of the product is compromised and the valve must be scrapped.

Another drawback of this first type of conventional valve consists in that, at the assembly stage at the final installer, the valve could be damaged by the braze welding of the connecting pipes.

At the time of installation the operator will need to insert the copper pipe to be connected into the pocket of the connection to be welded which is present at the ends of the valve.

The operator will then execute the operation to weld the two pipes with weld filler material, usually silver alloy or copper/phosphorus alloy.

This operation must be done while enfolding the valve body in a wetted rag so as to keep the component cold and directing the welding torch outward (not in the direction of the valve body).

If these recommendations are not followed, the high temperatures can damage (melt or deform) the sealing berths of the ball and the annular sealing gaskets of the actuation stem.

If these sealing elements are damaged, the seal of the product is compromised and the valve must be scrapped.

A further drawback of this first type of conventional valve consists in that, during operation, this type of valve may over time be susceptible to leaks from TIG welds, in particular when used with R744 gas (CO₂) at high pressure (up to 150 bar).

In fact TIG welds are tested during production of the valve, but they can have non-visible "blisters" inside, which under conditions of fatigue and at high pressure may expand until the weld itself fails, in so doing compromising the seal between the valve body and the sleeve.

The second type is a ball valve with threaded connections.

This second type of valve has the same components as those described for ball valves with welded connections, but the connection to the system is done with male or female threadings of various types.

Although such conventional valves overcome the drawback of overheating during the process of connection by the operator to the system in which they are to be used, described above for the first type of conventional valve, this second type of conventional valve is not devoid of drawbacks either, among which is the fact that, since the connections are threaded, great care must be taken because the threadings, if not correctly isolated with sealants or copper gaskets, could generate leaks of coolant gas.

The aim of the present invention consists in providing a ball valve that is capable of overcoming the above mentioned drawbacks, by avoiding overheating of the internal elements, including the sealing elements.

Within this aim, an object of the present invention consists in providing a ball valve that is designed specifically for the sectors of air conditioning and refrigeration and therefore is adapted to operate with refrigerant gases.

Another object of the present invention consists in providing a ball valve that is free from leaks between the valve body and the sleeve, therefore without compromising the seal of the valves and so resulting in production discards, or generating bursts in the welds as a result of the high pressure of the gas used.

A further object of the present invention is to provide a ball valve that can be mounted in a simple and rapid manner.

Another object of the present invention consists in providing a ball valve that is easy to use, and does not require specialist technicians for its installation.

Another object of the present invention consists in providing a ball valve that is capable of offering the widest assurances of reliability, efficiency and operation.

Another object of the present invention is to provide a ball valve that can be constructed with known technology in the technical sector of interest and therefore can be produced at low cost.

This aim and these and other objects which will become more apparent hereinafter are achieved by a ball valve, particularly for air conditioning and/or refrigeration systems, according to claim 1.

Further characteristics and advantages of the invention will become more apparent from the detailed description of a preferred, but not exclusive, embodiment of a ball valve, particularly for air conditioning and/or refrigeration systems, which is illustrated by way of non-limiting example with the aid of the accompanying drawings wherein:

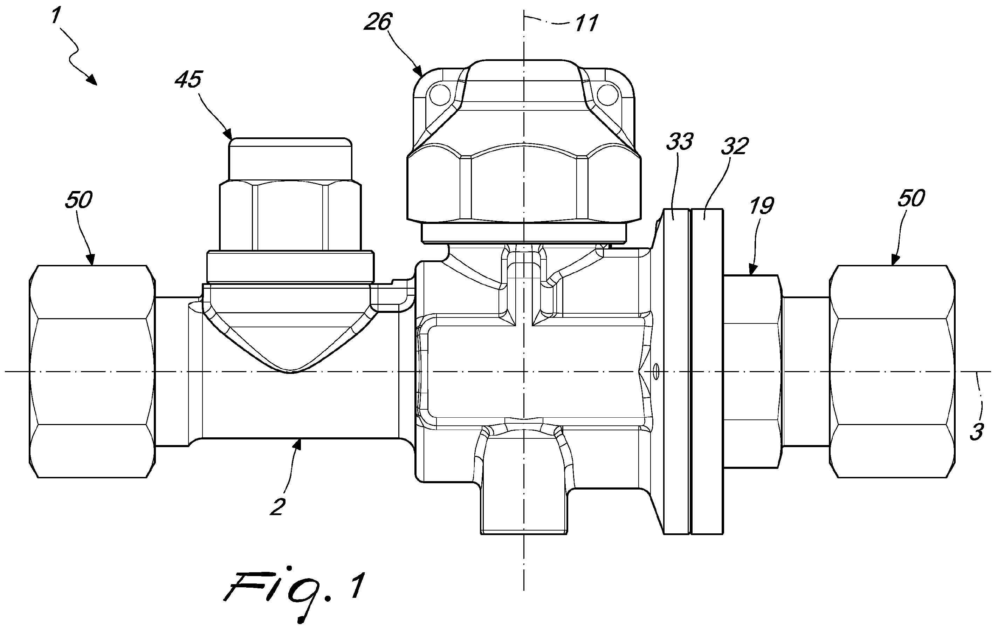

- Figure 1 is a side view of a ball valve according to the invention;

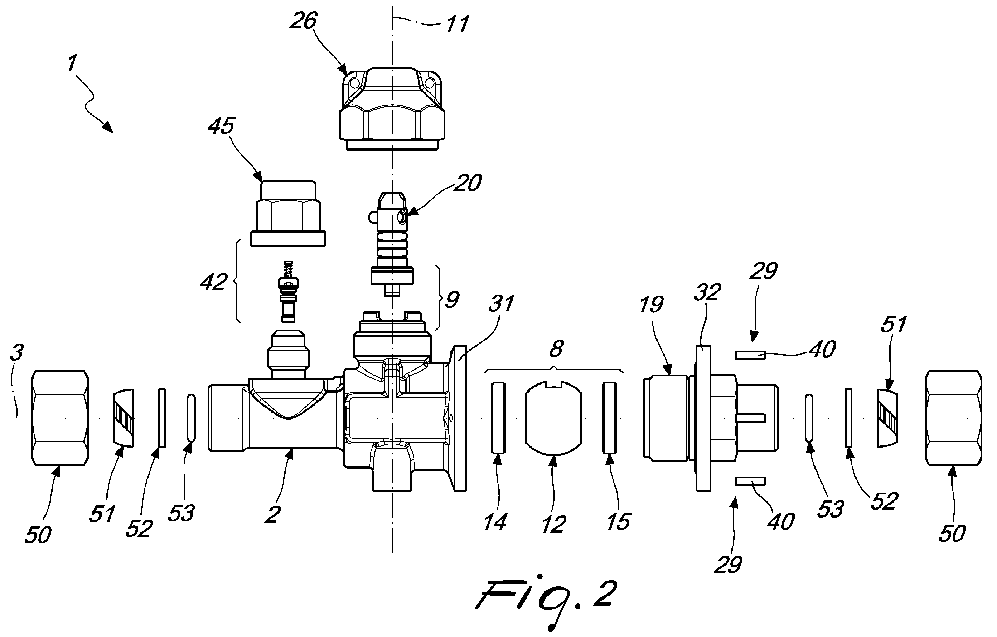

- Figure 2 is an exploded side view of the ball valve shown in Figure 1;

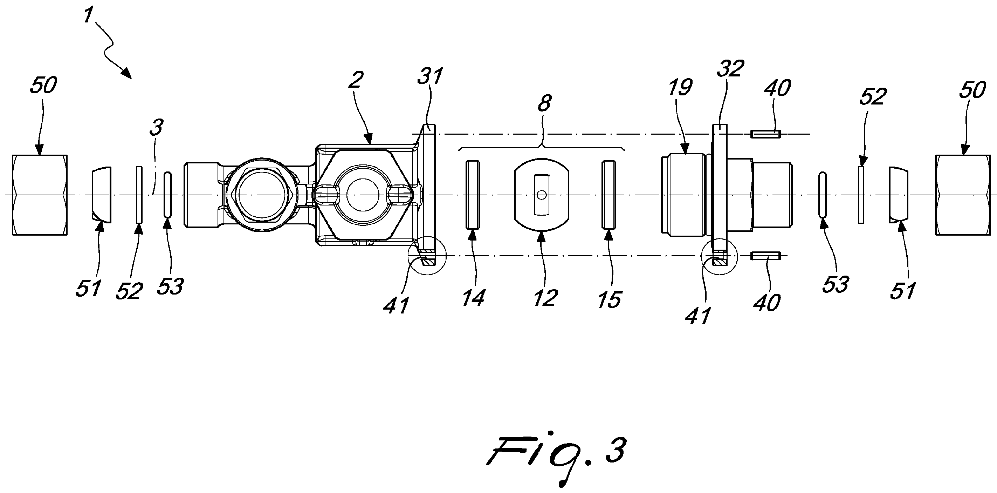

- Figure 3 is an exploded plan view from above of the ball valve shown in the previous figures;

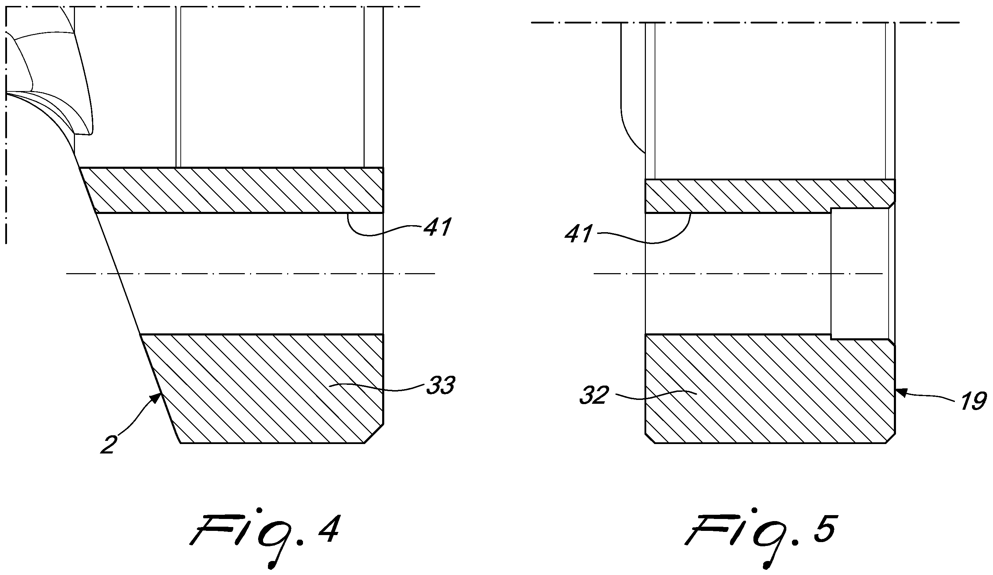

- Figure 4 is a first enlarged-scale detail of the ball valve shown in Figure 2;
- Figure 5 is a second enlarged-scale detail of the ball valve shown in Figure 2;

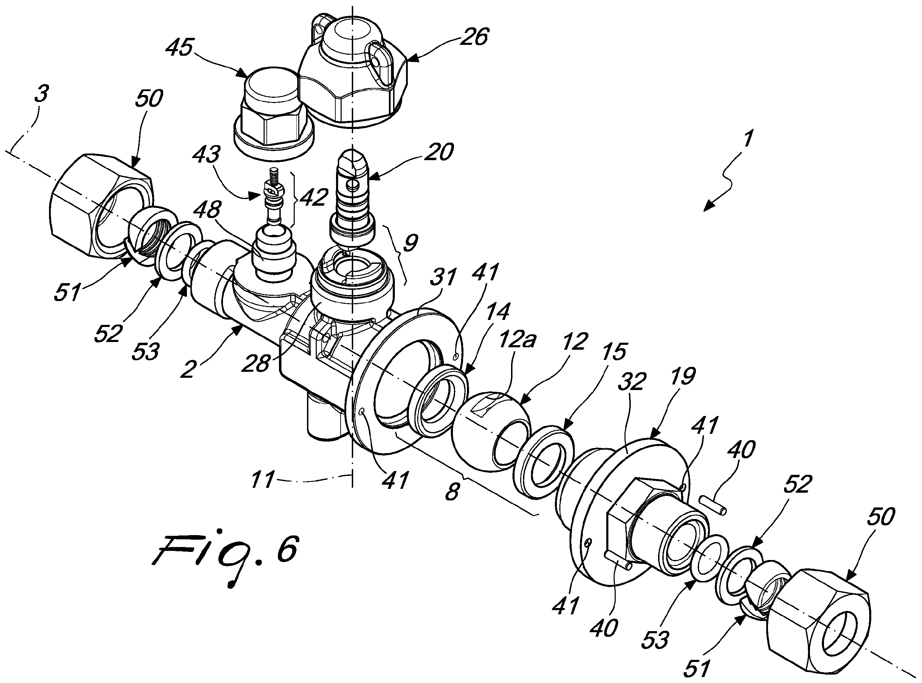

- Figure 6 is a first exploded perspective view, seen from a first viewpoint, of the ball valve shown in the previous figures;

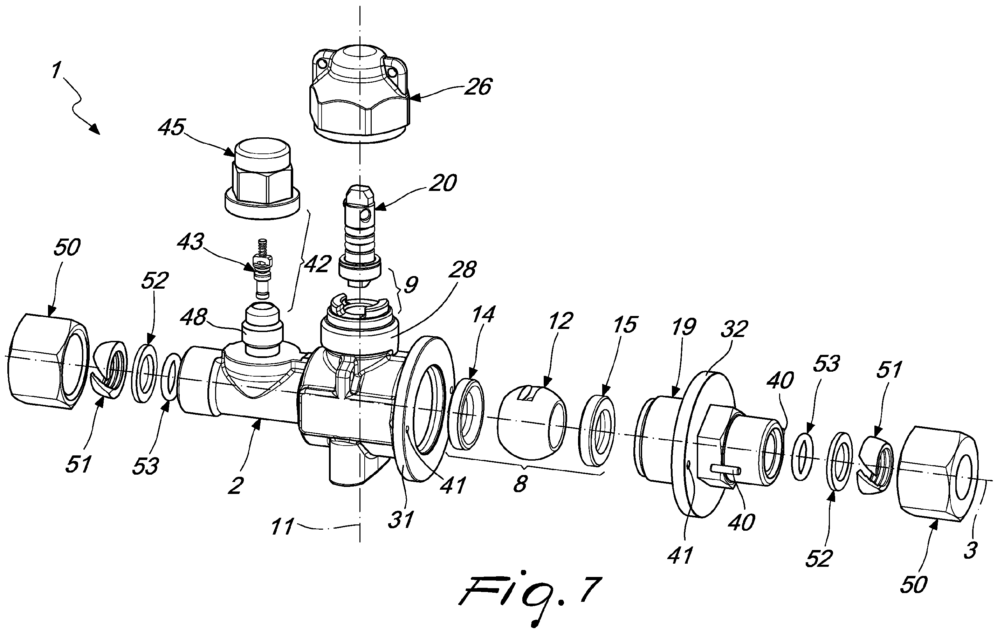

- Figure 7 is a second perspective view, seen from a second viewpoint, of the ball valve shown in the previous figures;

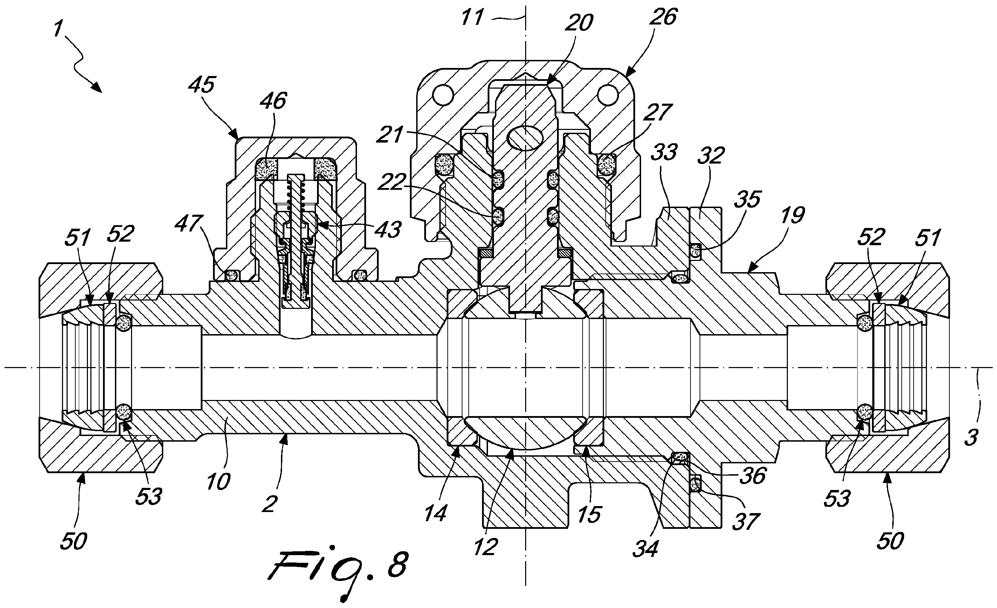

- Figure 8 is a cross-sectional view of the ball valve shown in the previous figures, taken along a longitudinal plane of the valve body;

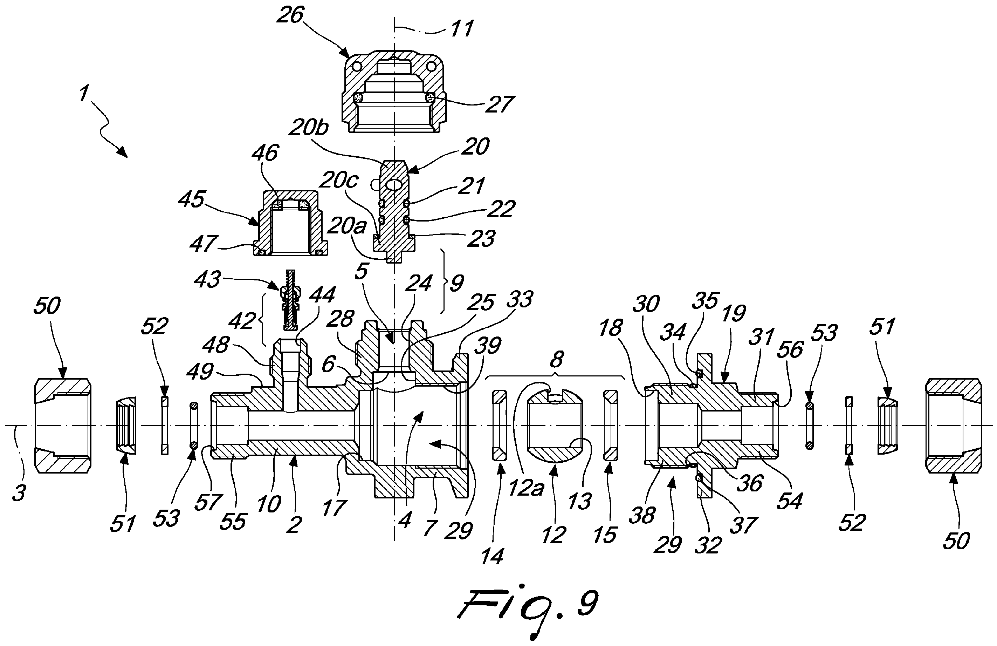

- Figure 9 is an exploded cross-sectional view of the ball valve shown in the previous figures, taken along a longitudinal plane of the valve body.

With reference to the figures, the ball valve, particularly for air conditioning and/or refrigeration systems, is generally designated by the reference numeral 1 and, according to the invention, comprises a valve body 2, made for example of brass or stainless steel, which has a substantially axially symmetrical geometry with a circular base with respect to a longitudinal axis 3 and defines inside it a first chamber 4 and a second chamber 5 which communicate with each other through a central hole 6.

In more detail, the first chamber 4 is of the type that is open at an end portion 7 thereof for inserting inside it, respectively, a valve assembly 8 and an actuation assembly 9.

Furthermore, the valve body 2 comprises a hollow connecting portion 10, located and extending along the longitudinal axis 3 on the opposite side with respect to the first chamber 4 and configured, as will be better described below, so that it can be connected to a first connecting pipe of a refrigeration system or the like.

The valve assembly 8, accommodated in the first chamber 4, has an actuation axis 11 that is substantially perpendicular to the longitudinal axis 3, and comprises:
- a ball 12, made for example of brass or stainless steel, which is accommodated in the first chamber 4 and has a through hole 13 with a diameter greater than or equal to the inside diameter of the hollow connecting portion 10;
- two sealing berths 14 and 15, made for example of PTFE, which are accommodated respectively in two sealing seats 17 and 18 obtained respectively on the valve body 2 and on a sleeve 19, which is associated with the valve body 2 so as to close the first chamber 4, in such a way as to support the ball 12 and hold it in position.

The actuation assembly 9, accommodated in the second chamber 5 along the actuation axis 11, comprises an actuation stem 20 made for example of stainless steel and completed with gaskets 21 and 22 and with an anti-friction washer 23 made for example of PTFE.

In more detail, the actuation stem 20, which extends along the actuation axis 11, has a first end portion 20a, in a shape mating arrangement with a respective contoured cavity 12a of the ball 12 for the rotation thereof about the actuation axis 11, and a second end portion 20b which is opposite with respect to the first end portion 20a and protrudes from the valve body 2 through a passage hole 24 defined in the second chamber 5 along the actuation axis 11.

Conveniently, between the end portions 20a and 20b there is an intermediate portion 20c which is radially enlarged and accommodated in a respective radially enlarged part 25 of the second chamber 5 so as to define an undercut for preventing the extraction and ejection of the actuation stem 20.

To protect the actuation stem 20, there is also a first female-threaded metallic cap 26, complete with an additional annular sealing gasket 27, which is screwed onto a first male-threaded shank 28 defined around the passage hole 24 of the second chamber 5, which can be sealed to the valve body 2 by filling, in order to prevent unauthorized movements of the actuation stem 20 when the ball valve 1 is in operation.

Also according to the invention, there is the sleeve 19, mentioned previously, made for example of brass or stainless steel, which is removably associated with the valve body 2 at the end portion 7 by means of screw means 29 so as to close the first chamber 4.

As will be better described below, the sleeve 19 is also configured so as to be connectable to a second connecting pipe of a refrigeration system or the like.

Advantageously, the sleeve 19 comprises:
- a first part 30, designed to be accommodated in the first chamber 4;
- a second part 31, which is opposite with respect to the first part 30 along the longitudinal axis 3 and is configured for its association with the second connecting pipe of a refrigeration system or the like; and
- a flanged part 32, which is intermediate with respect to the parts 30 and 31 along the longitudinal axis 3 and is adapted to abut against a respective flanged rim 33 defined by the valve body 2 at the end portion 7.

Conveniently, the first part 30 defines the sealing seat 18 of the sealing berth 15 of the ball 12.

Furthermore, the sleeve 19 comprises two annular gaskets 34 and 35, a first one of which provides a radial seal and a second one provides a front seal.

The first annular gasket 34 is accommodated in a respective first circular groove 36 which extends radially with respect to the longitudinal axis 3, defined between the first part 30 and the flanged part 32 at the radially innermost portion of the latter, and the second annular gasket 35 is accommodated in a respective second circular groove 37 which extends axially with respect to the longitudinal axis 3, defined on the face of the flanged part 32 that is intended to come into abutment with the flanged rim 33.

Conveniently, such annular gaskets 34 and 35 and such circular grooves 36 and 37 are dimensioned so that when the ball valve 1 is assembled with the flanged part 32 in abutment with the flanged rim 33, the elastomers end up inside closed chambers and cannot be pulled out from those grooves by the pressure.

Advantageously, the screw means 29 comprise a male threaded portion 38 defined on the outer surface of the first part 30 of the sleeve 19 and a female threaded portion 39 defined on the inner surface of the first chamber 4 at the end portion 7.

Likewise advantageously, the screw means 29 further comprise at least two pins 40, made for example of stainless steel, engaging in respective holes 41 defined partly on the flanged part 32 and partly on the flanged rim 33 along a direction which is parallel to the longitudinal axis 3.

More specifically, once the sleeve 19 is tightened on the valve body 2, the two parts are perforated with two holes 180° apart, creating the holes 41 for inserting the pins 40.

In this way, the pins 40, inserted after the ball valve 1 has been tested, keep the valve body 2 and the sleeve 19 in position and prevent accidental unscrewing between the two owing to vibrations, and prevent it from being dismantled by the end user.

The ball valve 1 can further comprise a charging assembly 42 associated with the valve body 2 at the hollow connecting portion 10.

In more detail, the charging assembly 42 comprises a male-threaded coupling 43 engaged in a female-threaded hole 44 defined on the hollow connecting portion 10 along an axis perpendicular to the longitudinal axis 3.

To protect the male-threaded coupling 43 and ensure the hermetic seal of the valve, there is also a second female-threaded metallic cap 45, complete with another two annular sealing gaskets 46 and 47, which is screwed on a second male-threaded shank 48 defined around the female-threaded hole 44 of the valve body 2 in such a way as to come into abutment against a corresponding flattened-out portion 49 defined on the outer surface of the hollow connecting portion 10.

These additional two annular gaskets 46 and 47 comprise a first gasket 46 which is positioned on the bottom of the second cap 45 and a second gasket 47 which is positioned so as to provide a seal when the second cap 45 comes into abutment against the flattened-out portion 49.

For connection to the system, the ball valve 1 is provided at its two ends with truncated conical ring connections known as FAST-LOCK CO2.

The following are fitted onto the pipe to be connected, in order: a nut 50, a truncated conical ring 51, a washer 52, all made of stainless steel, and an annular gasket 53.

The annular gasket 53, like the other gaskets mentioned up to this point, are made of neoprene, HNBR (Hydrogenated Nitrile Butadiene Rubber) or EPDM (Ethylene-Propylene Diene Monomer), depending on the refrigerant fluids used.

The pipes are then inserted, respectively, into the seats provided on the valve body 2, at the free end of the hollow connecting portion 10, and on the second part 31 of the sleeve 19, and the nuts 50 are tightened, with a suitable tightening torque, on respective male threadings 54 and 55 defined at the ends of the ball valve 1.

This system ensures that pipes under pressure will not be pulled out, owing to the conical rings 51 which constrict around the pipes, and the pressure maintenance by the annular gasket 53 which, after tightening, is lodged in the sealing seats 56 and 57 at the inlets of the valve body 2 and of the sleeve 19.

The operation of the ball valve 1 can be easily understood from the foregoing description.

The function of the device is to cut down and cut off the flow through the pipe by means of closing the ball 12.

This function is carried out, as with all ball valves, by rotating the actuation stem 20 by 90° in order to pass from a valve-open position to a valve-closed position and vice versa.

The presence of the charging nipple 43 integrated in the ball valve 1 makes it possible to use the component to charge the system with coolant.

Connection of the component to the system is done using FAST LOCK CO2 connectors which are simple and rapid to install, as previously described.

In practice it has been found that the ball valve, according to the present invention, achieves the set aim and objects.

In fact, by virtue of the fact that the valve body and the sleeve of the ball valve are not welded, thus leaving the seal between the two to a pair of annular gaskets in accommodation chambers which are closed so as to prevent the egress of the gaskets, the ball valve, according to the present invention, is not affected by problems of damage to the elastomeric gaskets and to the berths as a consequence of any overheating of the materials from TIG welding, as occurs in the prior art.

Another advantage of the ball valve, according to the present invention, consists in that the lack of welds leads to fewer discarded seals at the production stage and therefore it drastically reduces the number of pieces not eligible for testing.

Another advantage of the ball valve, according to the present invention, consists in that the lack of welds also ensures the quality of the seal of the product over time.

In fact, as there is no weld between the valve body and the sleeve, there also cannot be any non-visible blisters inside it which could result in leaks over time owing to the use of the component at high operating pressures (in particular with refrigerant fluids such as R744 in a transcritical state).

Another advantage of the ball valve, according to the present invention, consists in that it enables, facilitates, and renders less problematic the connection of the pipes to the ball valve by the end installation technician.

While in conventional applications the installation technician has to braze weld the pipes to the valve, while wrapping the valve in a wetted rag and taking great care not to overheat it, with the ball valve according to the present invention this problem is overcome because the end user will connect the pipes directly to the device with FAST LOCK CO2 connectors.

Another advantage of the ball valve, according to the present invention, consists in that, since it is not necessary to braze weld the connecting pipes to the system, a specialist technician in possession of a welding license is not required for the installation.

Another advantage of the ball valve, according to the present invention, consists in that it makes it possible to remove the valve from the system without needing to cut the connecting pipes.

If the valve for any reason should need to be replaced, for example because in some specific use cases the berths may have become worn from repeated opening/closing operations, the replacement operation is very simple, unlike for conventional valves for which replacement necessitates cutting the copper or steel pipes that were previously braze welded and then connecting a new valve, re-welding it to the pipes which, at this point, having been previously cut, may now be too short.

The ball valve, according to the present invention, instead makes it possible to replace the valve body in a very simple manner and without needing to cut the connecting pipes.

It is in fact sufficient to unscrew the FAST LOCK CO2 nuts and pull the pipes from the valve in order to remove the valve from the system and replace it.

The new valve can be reconnected by means of tightening the FAST LOCK CO2 nuts.

Another advantage of the ball valve, according to the present invention, consists in that it has a double sealing gasket at every possible leak point of the valve; in more detail, there are double gaskets between the valve body and the sleeve, on the actuation stem, and on the cap of the charging nipple.

This makes it possible to have an absolute guarantee that the ball valve is sealed in the immediate future, but above all for the entire life of the component.

Another advantage of the ball valve, according to the present invention, consists in that it is provided with an integrated charging nipple provided directly in the valve body.

This makes it possible to save the time that would be necessary for the end user to braze weld the charging nipple to another point in the system.

The charging nipple in our invention ensures the hermetic seal of the valve, in that in addition to the usual gaskets present on the charging mechanism, there is also a double-seal cap.

Another advantage of the ball valve, according to the present invention, consists in that it cannot be inadvertently dismantled by the end user, even though it is not welded, in that the valve body and the sleeve are locked in position by the insertion of two cylindrical pins.

The ball valve, thus conceived, is susceptible of numerous modifications and variations, all of which are within the scope of the appended claims.

For example, the valve can be produced with the valve body and sleeve made of both brass and stainless steel, and the elastomeric sealing gaskets can be produced in different blends depending on compatibility with the various refrigerant fluids.

Moreover, all the details may be substituted by other, technically equivalent elements.

In practice the materials employed, provided they are compatible with the specific use, and the contingent dimensions and shapes, may be any according to requirements and to the state of the art.

The disclosures in Italian Patent Application No. 102024000020887 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A ball valve (1), particularly for air conditioning and/or refrigeration systems, **characterized in that** it comprises:
- a valve body (2) which has a substantially axially symmetrical geometry with a circular base with respect to a longitudinal axis (3) and defines inside it a first chamber (4) and a second chamber (5) which communicate with each other through a central hole (25); said first chamber (4) being of the type that is open at an end portion (7) thereof for the insertion therein of a valve assembly (8) and an actuation assembly (9), respectively; said valve body (2) comprising a hollow connecting portion (10), located and extending along said longitudinal axis (3) on the opposite side with respect to said first chamber (4) and configured so that it can be connected to a first connecting pipe of a refrigeration system or the like;
- said valve assembly (8) being accommodated in said first chamber (4) and having an actuation axis (11) which is substantially perpendicular to said longitudinal axis (3);
- said actuation assembly (9) being accommodated in said second chamber (5) along said actuation axis (11);
- a sleeve (19) which is removably associated with said valve body (2) at said end portion (7) by virtue of screw means (29) so as to close said first chamber (4); said sleeve (19) being configured so that it can be connected to a second connecting pipe of a refrigeration system or the like.

2. The ball valve (1) according to claim 1, **characterized in that** said valve assembly (8) comprises:
- a ball (12), which is accommodated in said first chamber (4) and is provided with a through hole (13) having a diameter greater than or equal to the inside diameter of said hollow connecting portion (10);
- two sealing berths (14, 15) accommodated respectively in two sealing seats (17, 18) obtained respectively on said valve body (2) and on said sleeve (19) so as to support said ball (12) and hold it in position.

3. The ball valve (1) according to claim 2, **characterized in that** said actuation assembly (9) comprises an actuation stem (20) which extends along said actuation axis (11) and has a first end portion (20a) in a shape mating arrangement with a respective contoured cavity (12a) of said ball (12) for the rotation of said ball (12) about said actuation axis (11) and a second end portion (20b) which is opposite with respect to said first end portion (20a) and protrudes from said valve body (2) through a passage hole (24) defined in said second chamber (5) along said actuation axis (11); between said end portions (20a, 20b) there being an intermediate portion (20c) which is radially enlarged and accommodated in a respective radially enlarged part (25) of said second chamber (5) so as to define an undercut for preventing the extraction and ejection of said actuation stem (20).

4. The ball valve (1) according to one or more of the preceding claims, **characterized in that** said sleeve (19) comprises:
- a first part (30) designed to be accommodated in said first chamber (4), said first part (30) defining one of said sealing seats (18) of said sealing berths (14, 15) of said ball (12);
- a second part (31), which is opposite with respect to said first part (30) along said longitudinal axis (3) and is configured for its association with said second connecting pipe of a refrigeration system or the like;
- a flanged part (32), which is intermediate with respect to said parts (30, 31) along said longitudinal axis (3) and is adapted to abut against a respective flanged rim (33) defined by said valve body (2) at said end portion (7).

5. The ball valve (1) according to one or more of the preceding claims, **characterized in that** said screw means (29) comprise a male threaded portion (38) defined on the outer surface of said first part (30) of said sleeve (19) and a female threaded portion (39) defined on the inner surface of said first chamber (4) at said end portion (7).

6. The ball valve (1) according to one or more of the preceding claims, **characterized in that** said screw means (29) further comprise at least two pins (40) engaging in respective holes (41) defined partly on said flanged part (32) and partly on said flanged rim (33) along a direction which is parallel to said longitudinal axis (3).

7. The ball valve (1) according to one or more of the preceding claims, **characterized in that** it comprises a charging assembly (42) associated with said valve body (2) at said hollow connecting portion (10).
